# EUROPÄISCHE PATENTANMELDUNG

(11) **EP 2 522 452 A1**
(43) Veröffentlichungstag der Anmeldung: **14.11.2012**
(21) Anmeldenummer: 12167694.4
(22) Anmeldetag: 11.05.2012
(51) Int. Cl.: B23K 1/005, B23K 1/20, B23K 26/42, C21D 1/42, F01D 5/00, C23C 28/00

(54) **Kombinierte Erwärmung zum Auflöten einer Spitzenpanzerung mittels Induktion und Laser**

(30) Priorität: 13.05.2011 DE 102011101576
(71) Anmelder: MTU Aero Engines GmbH, 80995 München (DE)
(72) Erfinder: Hanrieder, Herbert, 85411 Hohenkammer (DE)

(57) **Zusammenfassung**

Die vorliegende Erfindung betrifft ein Verfahren zur Beschichtung eines Bauteils (1) einer Gasturbine oder eines Flugtriebwerks, insbesondere zur Herstellung einer Schaufelspitzenpanzerung auf einer Schaufel einer Gasturbine oder eines Flugtriebwerks, bei welchem ein Beschichtungswerkstoff mit einem Lot auf dem Bauteil aufgebracht wird und das Bauteil induktiv erwärmt wird (3), wobei zumindest das Lot des Beschichtungswerkstoffs mittels eines Lasers (4) derart erwärmt wird, dass eine Lotverbindung zwischen Bauteil und Beschichtungswerkstoff erzielt wird, sowie eine entsprechende Vorrichtung zur Durchführung des Verfahrens.

## Beschreibung

### GEBIET DER ERFINDUNG

Die vorliegende Erfindung betrifft ein Verfahren zur Beschichtung eines Bauteils einer Gasturbine oder eines Flugtriebwerks, insbesondere zur Herstellung einer Schaufelspitzenpanzerung auf einer Schaufel einer Gasturbine oder eines Flugtriebwerks, bei welchem ein Beschichtungswerkstoff mit einem Lot auf dem Bauteil aufgebracht wird und das Bauteil induktiv erwärmt wird, sowie eine entsprechende Vorrichtung.

### STAND DER TECHNIK

Aus dem Stand der Technik ist es bekannt die Schaufelspitzen von Gasturbinen oder Flugtriebwerken, also allgemein Turbomaschinen, mit einer Panzerung zu versehen, um die Laufschaufeln einer Gasturbine oder einer Flugtriebwerks vor Verschleiß zu schützen. Insbesondere dient eine derartige Panzerung im Bereich der Schaufelspitzen dazu, die Schaufeln, die zur Ausbildung einer möglichst dichten Struktur an einer Ummantelung schleifen, zu schützen und den Schleifabtrag in der Ummantelung vorzusehen.

Aus der DE 10 2009 008 887 A1, DE 10 2007 010 256 A1, DE 10 2009 007 666 A1, DE 10 2008 003 100 A1 und der US 4,818,833 sind verschiedene Verfahren zur Spitzenpanzerung von Schaufeln einer Gasturbine oder eines Flugtriebwerks bekannt.

So beschreibt beispielsweise die DE 10 2007 010 256 A1 das induktive Erwärmen einer Schaufelspitze mit Hilfe eines Induktionsverstärkers, während in der US 4,818,833 die begrenzte Erwärmung der Schaufelspitze durch besondere Ausbildung eines entsprechenden Aufnahmeraums und gezieltes Ein- und Ausfahren der Schaufelspitze in den Aufnahmeraum erzielt werden soll.

Bei den vorgeschlagenen Lösungen besteht jedoch weiterhin das Problem, dass mit der Erwärmung der Schaufelspitze auch eine Erwärmung der Turbinenschaufel einhergeht, welche zu einer lokalen Überhitzung des Schaufelwerkstoffs führen kann. Dadurch kann es zu einer Eigenschaftsveränderung des Werkstoffs des Schaufelgrundkörpers und somit zu einer Beeinträchtigung der Eigenschaften der Schaufel kommen.

Die CH 674650 A5 beschreibt ein Verfahren und eine Vorrichtung zur Wärmebehandlung von Oberflächenbeschichtungen in Form von Legierungen, wobei die Beschichtung mittels eines Laserstrahls eingeschmolzen wird und eine Wärmevor- und/oder Wärmenachbehandlung vorgesehen ist.

### OFFENBARUNG DER ERFINDUNG

### AUFGABE DER ERFINDUNG

Es ist deshalb Aufgabe der vorliegenden Erfindung ein Verfahren zur Beschichtung eines Bauteils einer Gasturbine oder eines Flugtriebwerks, insbesondere ein Verfahren zur Herstellung einer Schaufelspitzenpanzerung auf einer Schaufel einer Gasturbine oder eines Flugtriebwerks, sowie eine entsprechende Vorrichtung zur Durchführung eines derartigen Verfahrens bereitzustellen, bei welchen die Temperaturbelastung des Grundwerkstoffs der Schaufel minimiert wird, wobei gleichzeitig sowohl Vorrichtung als auch Verfahren einfach aufgebaut bzw. durchführbar sein sollen und eine effektive und qualitativ hochwertige Beschichtung des Bauteils gewährleisten sollen.

### TECHNISCHE LÖSUNG

Diese Aufgabe wird gelöst durch ein Verfahren mit den Merkmalen des Anspruchs 1 sowie einer Vorrichtung mit den Merkmalen des Anspruchs 11. Vorteilhafte Ausgestaltungen sind Gegenstand der abhängigen Ansprüche.

Die Erfindung zeichnet sich dadurch aus, dass eine Kombination von induktiver Erwärmung des Bauteils und gezielter Aufheizung eines lokalen Bereichs des zu beschichtenden Bauteils bzw. des Beschichtungswerkstoffs vorgenommen wird. Durch diese Maßnahmen wird gewährleistet, dass der Beschichtungswerkstoff sicher und zuverlässig mit dem Grundwerkstoff des Bauteils verbunden wird, wobei gleichzeitig eine Überhitzung des Grundwerkstoffs vermieden wird.

Die lokale Erwärmung wird durch Laserlichtbestrahlung mit einem Laser bewirkt, so dass eine gezielte Erwärmung hinsichtlich Ort und Umfang der Erwärmung möglich ist. Darüber hinaus erlaubt die Verwendung eines Lasers ein einfaches Überstreichen (Scannen oder Abrastern)einer zu beschichtenden Oberfläche eines Bauteils.

Erfindungsgemäß wird der zu beschichtende Werkstoff mit einem Lot auf dem Bauteil aufgebracht, sodass mittels des Lots eine stoffschlüssige Verbindung des Beschichtungswerkstoffs oder seiner Komponenten mit dem Bauteil erzielt wird. Beispielsweise werden die Hartstoffpartikel einer Panzerung in dem Lot eingebettet, welches durch das Löten eine stoffschlüssige Verbindung mit dem Grundwerkstoff der Schaufel eingeht.

Die Intensität der Lichtbestrahlung hinsichtlich der Lichtintensität und der zeitlichen Intensität kann so gewählt werden, dass genau die Temperatur im Bereich des auf dem Bauteil aufgebrachten Beschichtungswerkstoffs erzeugt wird, die für ein Löten erforderlich ist. Hierbei kann sowohl Schmelzlöten als auch Diffusionslöten eingesetzt werden, wobei das Schmelzlöten aufgrund der schnelleren Prozessdurchführung bevorzugt ist.

Die durch die Induktion erzeugte Temperatur des Bauteils in dem Bereich, in dem die Beschichtung aufgebracht werden soll, kann entsprechend unterhalb der erforderlichen Löttemperatur liegen, insbesondere bis zu 500 °C, vorzugsweise bis zu 300 °C oder 200 °C unterhalb der entsprechenden Löttemperatur. Dies ist abhängig von den gewählten Werkstoffen des Bauteils, der Beschichtung und des Lots.

Die Induktionserwärmung kann bereits einige Zeit vor dem Beginn der Lasererwärmung einsetzen und über den Zeitraum, in dem die Lasererwärmung stattfindet, fortgesetzt werden. Alternativ ist es auch möglich, die Lasererwärmung gleichzeitig mit der Induktionserwärmung zu starten oder die Induktionserwärmung während der Lasererwärmung teilweise oder ganz auszusetzen.

Der Beschichtungswerkstoff und/oder das Lot können bereits vor der Induktionserwärmung, nach der Induktionserwärmung und vor dem Lasererhitzen oder auch während der Induktionserwärmung aufgebracht werden.

Der Beschichtungswerkstoff kann insbesondere in Form eines Formteils aufgebracht werden, welches zusätzlich auch das Lot umfassen kann. Ein entsprechendes Formteil kann als Band oder als Folie ausgebildet sein und kann mindestens ein Bindemittel und eine Komponente der herzustellenden Beschichtung, wie beispielsweise die Hartstoffpartikel für die Panzerung umfassen. Das Lot kann in entsprechender Pulverform dem Formteil zugegeben sein, so dass beispielsweise ein sogenanntes Löttape aus einer Matrix aus Bindemittel und Lötpulver mit eingebetteten Hartstoffpartikeln zur Ausbildung einer entsprechenden Panzerung ausgebildet sein kann.

Das Lot wird in Abhängigkeit des Beschichtungswerkstoffs und des Grundwerkstoffs des zu beschichtenden Bauteils gewählt, wobei für den angestrebten Einsatzzweck insbesondere ein Titanbasislot oder ein Nickelbasislot, d. h. ein Lot mit Nickel oder Titan als Hauptbestandteil, eingesetzt werden kann. Allgemein kann ein eutektisches Lot mit mindestens einem Basiswerkstoff des zu beschichtenden Bauteils eingesetzt werden, bei welchem zur Absenkung der Schmelztemperatur eine entsprechende Schmelztemperatur senkende Komponente zugegeben ist.

Das Lot kann auch eine MCrAly-Matrix oder eine MCrAlXZ-Matrix aufweisen, wobei M gleich Eisen, Kobalt, Nickel, Nickel-Kobalt oder Kobalt-Nickel ist und X durch Silizium, Tantal, Vanadium, Niob, Platin, Palladium und Z durch Yttrium, Titan, Hafnium, Zirkon oder Ytterbium gebildet sein kann.

Das Bindemittel kann ein Kunststoff, insbesondere thermoplastischer Kunststoff, sein.

Der Beschichtungswerkstoff kann jede geeignete Zusammensetzung aufweisen. Insbesondere zur Ausbildung einer Panzerung können Hartstoffpartikel aus keramischen Werkstoffen, Nitriden, Karbiden, Boriden, Oxiden, insbesondere Bornitrid, kubisches Bornitrid, Titankarbid, Wolframkarbid, Chromcarbid, Aluminiumoxid und/oder Zirkonoxid und/oder Kombinationen daraus enthalten sein.

In Abhängigkeit von der Zusammensetzung des Lots, des Beschichtungswerkstoffs und des Bindemittels können unterschiedliche Löttemperaturen im Bereich von 800 bis 1300°C, vorzugsweise 1000 bis 1200°C, zum Einsatz kommen, wobei durch die Induktionserwärmung das Bauteil auf Temperaturen im Bereich von 600 bis 900°C aufgeheizt werden kann.

Die erfindungsgemäße Vorrichtung zum Durchführen eines entsprechenden Verfahrens umfasst neben der Induktionsvorrichtung zur Erwärmung des zu beschichtenden Bauteils somit einen Laser, der zumindest einen Teilbereich des zu beschichtenden Bauteils bestrahlen und erwärmen kann. Entsprechend können Laser unterschiedlicher Bauart und Funktionsprinzipien eingesetzt werden, die im Zusammenhang mit dem zu beschichtenden Bauteil, dem verwendeten Lot und dem Beschichtungswerkstoff eine entsprechende Erwärmung erzielen können.

Die Vorrichtung kann eine entsprechende Bauteilaufnahme aufweisen, in welcher das zu beschichtende Bauteil so angeordnet werden kann, dass eine gleichzeitige induktive Erwärmung und Erwärmung durch Laserbestrahlung in geeigneter Weise möglich ist. Insbesondere bei einer Beschichtung von Schaufeln einer Gasturbine oder eines Flugtriebwerks kann die Bauteilaufnahme so hergerichtet sein, dass die Schaufelspitze in Richtung des Lasers ausgerichtet ist, um ein dort angeordnetes Lot mit einem Beschichtungswerkstoff zu erhitzen, während Induktionsschleifen seitlich des Schaufelblattes, vorzugsweise parallel zu den Hauptflächen, also den Flächen mit der größten Dimensionierung, ausgebildet sein können.

Insbesondere kann mit dem vorliegenden Verfahren sowohl die Beschichtung von einzelnen Schaufeln einer Gasturbine oder eines Flugtriebwerks als auch von Bauteilkombinationen, wie beispielsweise sogenannten Blisken (Kombination von Blade und Disk (Blisk), also Schaufel und Scheibe), sowie von anderen Bauteilen durchgeführt werden.

### KURZBESCHREIBUNG DER FIGUREN

Die beigefügten Figuren zeigen in rein schematischer Weise in
- Fig. 1: eine Seitenansicht einer erfindungsgemäßen Vorrichtung zur Ausführung des erfindungsgemäßen Verfahrens;
- Fig. 2: eine Draufsicht auf die Vorrichtung aus Fig. 1 gemäß der Schnittlinie A-A aus Fig. 1

### AUSFÜHRUNGSBEISPIEL

Weitere Vorteile, Kennzeichen und Merkmale der vorliegenden Erfindung werden bei der nachfolgenden detaillierten Beschreibung eines Ausführungsbeispiels anhand der beigefügten Zeichnungen deutlich. Allerdings ist die Erfindung nicht auf dieses Ausführungsbeispiel beschränkt sondern der Schutzumfang richtet sich vielmehr nach den beigefügten Ansprüchen.

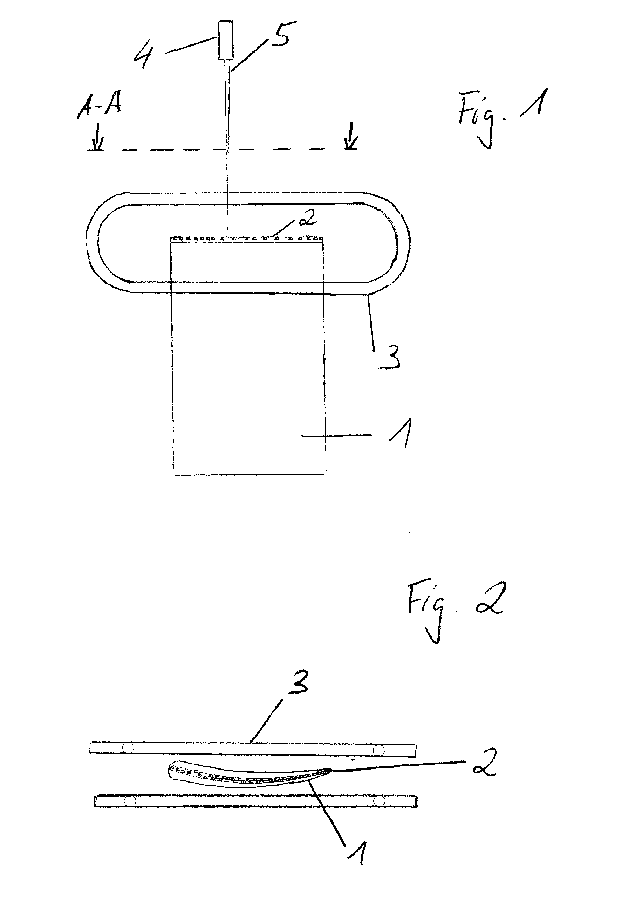

Die Fig. 1 zeigt in einer rein schematischen Darstellung eine Schaufel 1 einer Gasturbine oder eines Flugtriebwerks, welche mit einer Spitzenpanzerung versehen wird. Entsprechend ist an der Spitze der Schaufel 1 ein sogenanntes Tape 2 angebracht, welches die Hartstoffpartikel zur Ausbildung der Panzerung beinhaltet.

Das Tape 2 kann beispielsweise als flexibles Band oder als flexible Folie ausgebildet sein, wobei die Hartstoffpartikel in einer Matrix aus Bindemittel und Lotpulver eingebettet sind. Beim Erwärmen des Tapes 2 wird das Bindemittel, beispielsweise ein thermoplastischer Kunststoff verbrannt oder verflüchtigt sich im gasförmigen Zustand, während das Lotpulver aufschmilzt und die im Tape 2 eingebetteten Hartstoffpartikel mit dem Grundwerkstoff der Schaufel 1 verbindet.

Die in Fig. 1 gezeigte Vorrichtung umfasst zu diesem Zweck eine Induktionsvorrichtung 3, die durch eine Induktionsspule 3 dargestellt ist und einen Laser 4, welcher einen Laserstrahl 5 erzeugen kann, der auf die Spitze der Schaufel 1 gerichtet werden kann.

Durch die Induktionsvorrichtung, welche beispielsweise mit hochfrequentem Wechselstrom mit Frequenzen im Bereich zwischen 50 und 700 kHz, vorzugsweise 100 bis 600 kHz betrieben wird, werden wechselnde Magnetfelder erzeugt, die wiederum in der Schaufel 1 Ströme induzieren, die zu einer Erwärmung der Schaufel 1 führen. Durch die dadurch erzeugte Wärme in der Schaufel 1 wird eine Vorwärmung bewirkt, die jedoch so eingestellt wird, dass die erzielte Temperatur unterhalb der Löttemperatur ist, die für das Auflöten des Tapes 2 auf der Schaufel 1 erforderlich ist.

Die notwendige Löttemperatur im Bereich der Schaufelspitze zum Auflöten des Tapes 2 auf die Schaufel 1 wird durch den Laser 4 bzw. Laserstrahl 5 erzeugt, der über den Bereich der Schaufelspitze verschwenkt werden kann, sodass kurzfristig lokal im Bereich des Tapes 2 die Löttemperatur erreicht wird, sodass das Tape 2 auf der Schaufel 1 aufgelötet wird. Hierbei wird das Bindemittel verbrannt oder ausgetrieben und das Lotpulver wird aufgeschmolzen, sodass darin befindliche Hartstoffpartikel in dem Lot eingelagert auf der Schaufelspitze der Schaufel 1 gebunden werden.

In der Draufsicht der Fig. 2 ist die Anordnung insbesondere des Tapes 2 auf der Schaufelspitze der Schaufel 1 und die seitliche Anordnung der Induktionsschleifen 3 neben dem Schaufelblatt deutlicher zu erkennen. Wie in der Fig. 2 gezeigt ist, wird der Beschichtungswerkstoff in Form des Tapes 2 als schmales Band auf der Schaufelspitze der Schaufel 1 angeordnet, wobei das Band beispielsweise durch Aufkleben, Punktschweißen oder in ähnlicher Form vorbefestigt werden kann. Die Induktionsschleifen 3 sind parallel zu den Hauptflächen der Schaufel 1, also den Seitenwänden der Schaufel, die die Druck- und Saugseite der Gasturbinenschaufel bilden, angeordnet, um insbesondere eine effektive Erwärmung der Schaufel 1 im Bereich der Schaufelspitze zu ermöglichen. Aufgrund des Lasereinsatzes zur lokalen und gezielten Erreichung der Löttemperatur an der Schaufelspitze, kann die Temperatur, die durch die Induktionsvorrichtung erzeugt werden muss, so niedrig gewählt werden, dass der Werkstoff der Schaufel 1 nicht verändert und insbesondere nicht beeinträchtigt wird. Eine kritische Wärmeeinbringung erfolgt somit nur noch im Bereich der Schaufelspitze bis zum Bereich der Diffusionszone der Lötverbindung.

Das erfindungsgemäße Verfahren hat weiterhin den Vorteil, dass durch den Laser 4 das lokal begrenzte Aufschmelzen exakt bei verschiedensten Bauteilgeometrien durchgeführt werden kann, da der Laserstrahl 5 entsprechend gut örtlich positioniert werden kann. Damit lässt sich auch eine einfache Automatisierung des Verfahrens durchführen.

Obwohl die vorliegende Erfindung anhand des Ausführungsbeispiels detailliert beschrieben worden ist, ist für den Fachmann selbstverständlich, dass die Erfindung nicht auf dieses Ausführungsbeispiel beschränkt ist, sondern das vielmehr Abwandlungen in der Weise möglich sind, dass einzelne Merkmale weggelassen werden können oder dass andersartige Kombinationen von Merkmalen vorgenommen werden können, ohne dass der Schutzbereich der beigefügten Ansprüche verlassen wird. Die Offenbarung der vorliegenden Erfindung umschließt insbesondere sämtliche Kombinationen aller Einzelmerkmale.

## Patentansprüche

1. Verfahren zur Beschichtung eines Bauteils (1) einer Gasturbine oder eines Flugtriebwerks, insbesondere zur Herstellung einer Schaufelspitzenpanzerung auf einer Schaufel einer Gasturbine oder eines Flugtriebwerks, bei welchem ein Beschichtungswerkstoff mit einem Lot auf dem Bauteil aufgebracht wird und das Bauteil induktiv erwärmt wird, und
zumindest das Lot des Beschichtungswerkstoffs mittels eines Lasers (4) derart erwärmt wird, dass eine Lotverbindung zwischen Bauteil und Beschichtungswerkstoff erzielt wird, **dadurch gekennzeichnet, dass**
die induktive Erwärmung gleichzeitig während der Lasererwärmung in dem Bereich erfolgt, in dem die Lasererwärmung erfolgt.

2. Verfahren nach Anspruch 1,
**dadurch gekennzeichnet, dass**
mittels des Lasers (4) im Bereich des auf dem Bauteil (1) aufgebrachten Beschichtungswerkstoffs eine Temperatur erzeugt wird, die ein Schmelzlöten und/oder Diffusionslöten ermöglicht.

3. Verfahren nach Anspruch 1 oder 2,
**dadurch gekennzeichnet, dass**
die durch die Induktion erzeugte Temperatur des Bauteils (1) unterhalb der für ein Schmelzlöten und/oder Diffusionslöten notwendigen Temperatur liegt, insbesondere bis zu 500°C, vorzugsweise bis zu 350°C unterhalb der für das Schmelzlöten und/oder Diffusionslöten des Lots notwendigen Temperatur.

4. Verfahren nach einem der vorhergehenden Ansprüche,
**dadurch gekennzeichnet, dass**
der Beschichtungswerkstoff und/oder das Lot vor der Induktionserwärmung, nach der Induktionserwärmung oder während der Induktionserwärmung aufgebracht werden.

5. Verfahren nach einem der vorhergehenden Ansprüche,
**dadurch gekennzeichnet, dass**
die Induktionserwärmung zusätzlich vor der Lasererwärmung erfolgt.

6. Verfahren nach einem der vorhergehenden Ansprüche,
**dadurch gekennzeichnet, dass**
der Beschichtungswerkstoff in Form eines Formteils (2) aufgebracht wird, welches als Band oder Folie ausgebildet ist und mindestens ein Bindemittel und Komponenten der herzustellenden Beschichtung umfasst.

7. Verfahren nach Anspruch 6,
**dadurch gekennzeichnet, dass**
das Formteil zusätzlich das Lot, insbesondere in Pulverform umfasst.

8. Verfahren nach einem der vorhergehenden Ansprüche,
**dadurch gekennzeichnet, dass**
das Lot ein Titanbasislot, ein Nickelbasislot, ein eutektisches Lot mit mindestens einem Basiswerkstoff des zu beschichtenden Bauteils, ein Lot mit einer MCrAlY-Matrix oder MCrAlXZ-Matrix mit M=Fe, Co, Ni, NiCo und CoNi, X=Si, Ta, V, Nb, Pt, Pd und Z=Y, Ti, Hf, Zr, Yb ist.

9. Verfahren nach Anspruch 6,
**dadurch gekennzeichnet, dass**
das Bindemittel ein Kunststoff, insbesondere thermoplastischer Kunststoff ist.

10. Verfahren nach einem der vorhergehenden Ansprüche,
**dadurch gekennzeichnet, dass**
der Beschichtungswerkstoff Hartstoff-Partikel aus keramischen Werkstoffen, Nitriden, Karbiden, Boriden, Oxiden, insbesondere Bornitrid, kubischem Bornitrid, Titankarbid, Wolframkarbid, Chromkarbid, Aluminiumoxid und/oder Zirkonoxid und/oder Kombinationen daraus umfasst.

11. Vorrichtung zur Beschichtung eines Bauteils einer Gasturbine oder eines Flugtriebwerks, insbesondere zur Herstellung einer Schaufelspitzenpanzerung auf einer Schaufel einer Gasturbine oder eines Flugtriebwerks, insbesondere zur Durchführung des Verfahrens nach einem der Ansprüche 1 bis 10, mit einer Induktionsvorrichtung (3) zur Erwärmung des zu beschichtenden Bauteils,
**dadurch gekennzeichnet, dass**
die Vorrichtung weiterhin einen Laser (4) umfasst, der so angeordnet ist, dass während der induktiven Erwärmung des Bauteils (1) der Laserstrahl zumindest einen Teilbereich des Bauteils, der gleichzeitig induktiv erwärmt wird, bestrahlen und erwärmen kann.

12. Vorrichtung nach Anspruch 11,
**dadurch gekennzeichnet, dass**
die Vorrichtung eine Bauteilaufnahme umfasst, die so hergerichtet ist, dass eine zu beschichtende Schaufel einer Gasturbine oder eines Flugtriebwerks mit der Schaufelspitze in Richtung des Lasers ausgerichtet ist, während mindestens eine, vorzugsweise zwei Induktionsspulen seitlich des Schaufelblatts angeordnet sind.
